# EUROPEAN PATENT APPLICATION

(11) **EP 4 391 456 A1**
(43) Date of publication of application: **26.06.2024**
(21) Application number: 22216087.1
(22) Date of filing: 22.12.2022
(51) Int. Cl.: H04L 12/18

(54) **IMPROVED CONFERENCE SYSTEM AND CONFERENCING METHOD**

(71) Applicant: Televic Conference NV, 8870 Izegem (BE)
(72) Inventor: ROSEZ, Didier, B-8890 Dadizele (BE); VAN DAMME, Peter-Jan, B-9860 Balegem (BE); CALLANT, Jelmer, B-8510 Rollegem (BE)
(74) Representative: IPLodge bv

(57) **Abstract**

The present invention concerns a conference system comprising a central unit and a set of one or more delegate units whereby each of the delegate units is in a predefined connection arrangement with the central unit, whereby each of the delegate units comprises a display for showing an optical code, the conference system further comprising a conference server comprising a web interface, whereby the conference server and the central unit are configured to communicate with each other, whereby the central unit is configured to send data representing an optical code to each of the delegate units, said optical code comprising unique delegate unit identification information, whereby the conference server is configured to allow a web-based connection with a personal communication device and to receive the unique delegate unit identification information from said personal communication device, whereby the conference server and the central unit are configured to establish a logical link between the personal communication device and the delegate unit on the basis of the unique delegate unit identification information.

## Description

### Technical field

The present invention concerns an improved conference system and a related conferencing method. The conference system is particularly advantageous for moderated meetings such as council meetings, board meetings, general stock holder meetings, etc. Relevant cooperative patent classes (CPC) are G06Q10/10, H04L12/1822, H04L65/403, H04L65/4046, H04M3/567, H04M2203/1041, H04N7/15.

### Background

Moderated meetings are typically held in a conference room, with a moderator and a set of delegates. Preferably, the moderator arranges which delegate may speak at which moment and for how long. Hereby, use can be made of a conference system.

A conference system may comprise a central unit (CU) (typically only one central unit) and many delegate units (DU). A delegate unit typically contains both a graphical interface and hardware buttons to participate in a conference (e.g. voting, microphone activation, request to speak, volume control, ...). On the graphical interface, different types of content can be shown like microphone information, voting results, agenda, documents, video's,... Not all types of delegate units provide all types of content. The most basic ones exclude a display and for those with a display, only a small subset is capable of displaying documents and video.

Typically, the conference system (CU + DU's ) are connected in a proprietary network. In case of connection with other systems, this is done through the CU. Hence the attack surface of the conference system is limited to the CU.

Typically, the conference system (CU + DU's) is configured by a conference server. This can be running locally, or can be running in the cloud. When running in the cloud, an additional gateway device may be used to make the connection between the CU and the cloud-based management server. Using the local or cloud-based conference server, the meeting organizer can typically create new meeting templates, schedule new meetings, maintain the list of delegates, etc. The conference server can typically be configured to be easily reachable, e.g. via the internet, making it possible to prepare the meeting (e.g. arranging registrations, keep a list of registered participants, keep a list of speakers during an upcoming meeting, allow agenda updates, etc.). The central unit can typically be configured to be hard reachable, e.g. by allowing only outside connections from specific devices or services, such as the conference server. The CU is typically only activated shortly before the start of the meeting and can be deactivated shortly after the meeting ends. If a meeting is scheduled, the CU can typically be activated and connect to the conference server to obtain the specifics of the meeting (e.g. an agenda, a list of participants, a list of speakers, etc.).

The total number of delegate units in one conference system can amount to more than 2000 for some conference rooms. When conference rooms are coupled to form one virtual conference room, this number can be even higher. Hence, once a conference system is installed, one does not wish to change all the delegate units in case one wants to upgrade the functionalities thereof.

A delegate unit is also not able to provide authentication/identifications means with a 3^{rd} party identification / authentication service such as Google, Microsoft Authentication, itsme (in Belgium / The Netherlands) and others. Patent application EP2832084A1 discloses a delegate unit for use in a conference system comprising a user interface, a web browser arranged for accessing and displaying on the user interface web-based multimedia content, a web server arranged for delivering the multimedia content to the web browser and storage means for storing the multimedia content, whereby the web browser and the web server are adapted for communicating with each other. Patent documents EP2747424A1, EP3238424B1 and EP1874094B1 disclose related conference systems.

The prior art conference systems do not easily allow for improving the functionalities for the participants. The present invention aims to improve on this by providing a conference system and a related conferencing method which allows to increase the functionality for the delegates without the need for upgrading the hardware of the delegate units.

### Summary of the invention

The present invention relates to a conference system according to claim 1 and a conferencing method according to claim 13. Further embodiments are described below and in the dependent claims.

As indicated above, a conference system may have a large number of delegate units. Rather than upgrading all the delegate units of the conference system in order to increase its functionality, the present invention allows to increase the functionality indirectly. Hereto, the inventors have realized that personal communication devices, and in particular personal mobile devices such as smartphones and tablets, offer a large variety of functionalities such as:
- scanning and displaying functionalities,
- authentication, authorization and identification functionalities, optionally and preferably via a third-party service,
- communication functionalities such as WiFi, 3G, 4G, 5G,
and/or others. Hence, rather than upgrading the functionality of the delegate units, the present invention allows to establish a logical link between the delegate unit and the personal communication device which can be secure and reliable. Thereby, the conference system, and in particular the central unit and/or the conference server thereof, may exchange data with the personal communication device as if it were an extension to the delegate unit.

In orderto establish the logical link, an optical code is sent to the delegate unit which can be displayed to the user or users of the delegate unit. Each of these users may scan the optical code with their personal communication device, e.g. a smartphone or tablet. In an embodiment, the optical code, preferably a quick response (QR) code, comprises information that allows the personal communication device to connect to the conference server via the web and it may comprise additional information, such as meeting ID or CU ID. Preferably this is achieved using a URL encoded into the optical code, the URL being hosted, directly or indirectly, by the conference server. Note that this allows the conference server to limit the validity of the code, i.e. the code may be valid only for as long as the meeting is in progress. Another meeting may use another code, leading to another URL again hosted by the conference server. Alternatively, or additionally, the conference system comprises an conference application service product configured to be installed on a personal communication device, said conference application service product comprising instructions for a conference application service which is configured for:
∘ scanning the optical code comprising the unique delegate unit identification information;
∘ connecting to the conference server with a web-based connection and passing the unique delegate unit identification information to the conference server.

In such an embodiment, the information allowing the personal communication device to connect to the conference server via the web, can be encoded and/or pre-configured within the conference application service.

The optical code also comprises unique delegate unit identification information, i.e. the optical code comprises (directly or indirectly) information which identifies the delegate unit within the conference system. Since the optical code originates with the conference server and/or the central unit, each delegate unit can be identified by a centralized identification scheme and the conference server and/or central unit can keep track of which delegate unit is linked to which optical code. This means that the conference server and/or the central unit control which delegate unit links to which identification information. The delegate unit identification information is passed on to the conference server upon connection of the personal mobile device with the conference server. Preferably this identification information is passed via a URL encoded into the optical code.

More preferably, the optical code comprises information representing a URL which allows the personal communication device to connect to a site hosted by the conference server, the site specifically linked to the delegate unit via the delegate unit identification information.

In some embodiment, it may be important that the information embedded in the optical code (CU ID, meeting ID, ... ) is in one or other way protected against tampering, e.g. tampering with the optical code or with the URL, such as :
- The CU or the conference server keeps a list of all valid optical codes presented on the DUs
   - each of these may be considered as being and/or comprising a one-time token
- When the CU or central server generates the optical codes, it also adds random bits (a unique key, valid one time only) (thus the information is signed)
- The extension of the URL is encrypted with a / the public key of the CU or the Conference server
- Also: when a code has been scanned, then it becomes invalid
- When a meeting has ended, all associated optical codes become invalid

Important functionalities offered by the present invention are authentication, authorization and/or identification functionalities, optionally via a third-party service.

In a further aspect, the present invention also concerns a conference system comprising a central unit and a set of one or more delegate units whereby each of the delegate units is in a predefined connection arrangement with the central unit, whereby each of the delegate units comprises a display for showing an optical code, the conference system further comprising a conference server comprising a web interface, whereby the conference server and the central unit are configured to communicate with each other, whereby the central unit is configured to send data representing an optical code to each of the delegate units, said optical code comprising unique delegate unit identification information, whereby the conference server is configured to allow a web-based connection with a personal communication device and to receive the unique delegate unit identification information from said personal communication device, whereby the conference server is configured to, upon connection of a personal communication device with the server, authenticate, authorize and/or identify a user of the personal mobile device, preferably via a third party identity server, and preferably prior to establishing a logical link, optionally whereby the conference server and the central unit are configured to establish a logical link between the personal communication device and the delegate unit on the basis of the unique delegate unit identification information. The inventors have found that in some embodiments, it can be optional to establish a logical link between the PD and the DU, in particular in the case only authentication, authorization and/or identification of the user is required, and no additional functionalities need to be given to the user of the DU.

### Overview of the figures

**Figures 1A** and **1B** illustrate prior art conference systems.
**Figure 2** illustrates a conference system and conferencing method according to an embodiment of the present invention.
**Figure 3** illustrates a conference system and conferencing method according to an embodiment of the present invention.

### Detailed description of the invention

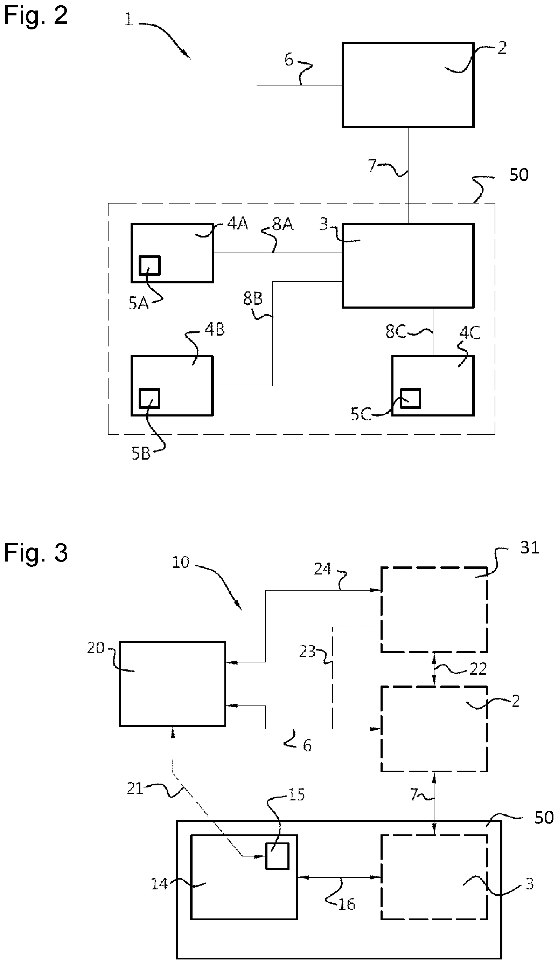

An embodiment of the invention is outlined in fig. 2, which illustrates a conference system (1) comprising a conference server (2), a central unit (3) and a set of delegate units (4A, 4B, 4C). The central unit (3) and each of the set of one or more delegate units (4A-C) is in a predefined connection arrangement (50) with the central unit (3), whereby each of the delegate units comprises a display (5A, 5B, 5C) for showing an optical code. The conference server (2) comprises a web interface (6), whereby the conference server and the central unit are configured to communicate (7) with each other. The the central unit (3) is configured to send data representing an optical code to each of the delegate units via predefined connections (8A, 8B, 8C), said optical code comprising unique delegate unit identification information. In an embodiment, the optical code comprises web-based connection information for allowing a personal communication device to connect via a browser application to the web interface (6) of the conference server and to pass the unique delegate unit identification information to the conference server. Alternatively, or additionally, the conference system comprises an conference application service product configured to be installed on a personal communication device, said conference application service product comprising instructions for a conference application service which is configured for:
∘ scanning the optical code comprising the unique delegate unit identification information;
∘ connecting to the conference server with a web-based connection and passing the unique delegate unit identification information to the conference server.

The central unit may, in an embodiment, be configured to send data representing an optical code to each of the delegate units upon request from the conference server, preferably in embodiments wherein the optical code comprises the web-based connection information. Alternatively, or additionally, the central unit may be configured to send data representing an optical code to each of the delegate units by its own initiative, preferably in embodiments wherein the conference system comprises the conference application service product.

The conference server (2) and the central unit (3) are configured to establish a logical link between the personal communication device which has scanned the optical code of a delegate unit and has connected to the conference server, and the delegate unit on the basis of the unique delegate unit identification information. The conference server is preferably further configured to establish a web-based session with the personal communication device.

A more elaborate embodiment of the present invention is illustrated in fig. 3. A conference system (10) is illustrated, comprising a conference server (2), a central unit (3) and a delegate unit (14) connected thereto (16). Only one delegate unit is shown, but it should be clear that many delegate units may be connected to the central unit in a similar manner as the delegate unit shown. The DU may be connected (16) to the CU in a private network, which may be wired or wireless or a combination of a wired and wireless network. Note that the network connecting the CU and the set of DUs typically is a dedicated physical network allowing to have a very low latency audio and video transport, due to the absence of interfering packets. The network can be kept very secure and e.g. separated from other networks, allowing an essentially tamper-free network. This means that the network which is used for certain important functions of the conference system, e.g. transmitting audio data or a vote, can be very secure and reliable. Upon request of the conference server (2) or by its own initiative, the CU (3) sends an optical code to the DU (14) which gets displayed on its display (15). A personal communication device (PD) (20) scans the optical code from the display (15), which optical code may preferably encode a URL hosted by the conference server. The URL allows the PD to connect to the web interface (6) of the conference server. This web-based connection allows the conference server to automatically obtain identification data of the PD and allows passing the delegate unit identification information to the conference server. Note that the delegate unit identification information could be encoded in the URL and that the conference server may host several URLs which correspond to the delegate units of the conference system and each URL encoding the respective delegate unit identification information. In a preferred embodiment, the conference server is configured to, upon connection of a personal communication device with the server, authenticate, authorize and/or identify a user of the personal communication device, preferably via a third party identity server, preferably prior to establishing the logical link . between CU and PD and thus delegate identity. This is illustrated in fig. 3, wherein an authentication, authorization and/or identification server (31), i.c. a third-party authentication, authorization and/or identification server, is shown which is connected to the conference server by a private connection (22) and/or a web-based connection (23). When the PD connects to the conference server, the conference server can be configured to first authenticate, authorize and/or identify the PD or the user thereof via the authentication, authorization and/or identification server. Hereto, the authentication, authorization and/or identification server typically may connect with the mobile device, preferably via the web, to authenticate, authorize and/or identify the PD or its user, and to communicate the result of the authentication, authorization and/or identification to the conference server. In case of correct authentication, authorization and/or identification, the conference server then maintains and/or establishes the logical link between the PD and the DU and optionally a web-based session is established between the conference server and the personal communication device.

In an embodiment, the conference server is configured to, upon connection of a personal communication device with the server, authenticate, authorize and/or identify a user of the personal mobile device prior to establishing the logical link. This ensures that only authenticated, authorized and/or identified users or PDs can interact with the conference system. However, in an alternative embodiment, the conference server is configured to, upon connection of a personal communication device with the server, establishing the logical link, and optionally afterwards authenticate, authorize and/or identify a user of the personal communication device.

The conference system can be used to execute a conferencing method comprising the steps of:
- providing a conference system according to the present invention;
- providing a set of one or more personal communication devices, each personal communication device (PD) comprising an optical scanner for scanning an optical code; the PDs will be able to interact with the conference system, said interaction being initiated by scanning of the optical code, as discussed here below.
- for each of the delegate units of the conference system:
   - generating an optical code for the delegate unit, said optical code comprising unique delegate unit identification information and web-based connection information for allowing a personal communication device to connect via a browser application to the web interface of the conference server and to pass the unique delegate unit identification information to the conference server. The optical code can be generated by the conference server and/or by the central unit.
   - sending the optical code to the delegate unit; this can be done using the predefined connection arrangement between central unit and the delegate units;
   - showing the optical code on the display of the delegate unit. This will allow a PD to initiate the interaction with the conference system.
- scanning an optical code shown on the display of a delegate unit by the personal communication device;
- connecting the personal communication device via a browser application to the web interface of the conference server using the web-based connection information of the optical code and passing the unique delegate unit identification information of the optical code from the personal communication device to the conference server;
- establishing a logical link between the personal communication device and the delegate unit on the basis of the unique delegate unit identification information,
- optionally establishing a web-based session with the personal communication device.

Preferably, the conference server and the central unit are configured to communicate with each other to exchange data concerning the unique delegate unit identification information and/or the web-based connection information. For instance, the central unit may transmit to the conference server a list comprising unique delegate unit identification information on the delegate units the central unit is connected to, and the conference server may transmit the web-based connection information to the central unit, for instance in the form of a list of URLs, each URL being linked to a delegate unit via the unique delegate unit identification information of said delegate unit. However, it should be clear that other possibilities exist.

In an embodiment, the conference server and central unit are combined in a single device. This allows fast interaction and data exchange between conference server and central unit.

In an embodiment, the conference server and the CU are connected via a gateway device.

In a typical embodiment, the predefined connection arrangement allows bidirectional data transfer between the central unit and each of the delegate units. Note that the increase in functionality of the conference system when a set of PDs are logically linked to respective delegate units, allows that PDs are used for communication of the users of the system with the central unit via the conference server. However, in many cases bidirectional data transfer between the central unit and a delegate unit remains advantageous, in particular since the predefined connection arrangement between central unit and delegate units can be kept very secure and data transfer, e.g. when a vote needs to be cast during the meeting, can thus also be kept secure. Note that the double connectivity of a user with the central unit, i.e. once via the delegate unit and the predefined connection arrangement and once via the PD of the user and the conference server, allows to double-check crucial data transfer. For instance, a vote can be cast via the DU, which could then be checked and optionally confirmed via the PD.

In an embodiment, the optical code is a two-dimensional barcode, more preferably a quick response (QR) code.

In an embodiment, the conference system comprises a set of one or more personal communication devices, each personal communication device comprising an optical scanner for scanning the optical code.

In an embodiment, the conference server is configured to, upon connection of a personal communication device with the server, authenticate, authorize and/or identify a user of the personal mobile device, preferably prior to establishing the logical link and/or preferably via a third party identity server. Authentication, authorization and identification of the users of the conference system, is one of the main advantageous of the present invention, since these important functionalities may be crucial for certain meetings, but are difficult to control at the level of the delegate unit. For instance, a DU may have a card reader and the user may have a smart card for identification/authorization. However, smart cards can be stolen or lost. A DU may have a fingerprint reader for identification/authorization. However finger print readers are less suited for identification. Moreover, it is not always practical to collect fingerprint samples of all delegates. Not all delegates would prefer having their fingerprint samples collected for the purpose of log in to a meeting. The present invention allows to decouple the procedure for authentication, authorization and identification from the delegate units and to rely on well-tested web-based procedures.

In a preferred embodiment, the conference server is configured to differentiate the functionalities and/or data which are offered to the personal communication device, preferably on the basis of the unique delegate unit identification information. This is particularly preferred in combination with authentication, authorization and/or identifying the user of the PD, and allows to offer different additional functionalities and/or data to different users of the conference system.

In an embodiment, the delegate units comprise a microphone, a loudspeaker, and/or a small screen. This offers important functionalities via the predefined connection arrangement.

In an embodiment, the central unit is connected to each delegate unit via a private network, such as a private IP network or a proprietary network, or via a gateway to the internet or to the server via an IP link.

In an embodiment, whereby the conference server is publicly reachable. This allows access to the conference server through public networks, and thus allows a PD to access the conference server without prior registration into e.g. a private network.

In a preferred embodiment, the set of delegate units comprise at least two delegate units, more preferably at least 3, 4, 5, 6, 7, 8, 9 or 10 delegate units.

In an embodiment, the set of delegate units is a first set of delegate units and the conference system may comprise a second set of delegate units, the second set of delegate units being different from the first set. The DUs of this second set may be configured differently the DUs of the first set, e.g. the second set DUs may lack a display or may not be configured and/or intended to have additional functionalities in accordance with the present invention.

In an embodiment, the optical code is, encodes and/or comprises a one-time token. This allows to ensure that the validity of the optical code to allow a PD to connect to the conference server is limited, and its limitation is essentially controlled by the conference server and/or the central unit.

In an embodiment, the optical code comprises a two-dimensional barcode, preferably a QR code.

In an embodiment, the optical code comprises a set of images, which may be a set of 1, 2, 3, 4, 5, 6, 7, 8, 9, 10 or more images. In the case the set of images comprises at least 2 images, preferably the images are sent sequentially to the DUs and/or are shown sequentially on the display of the DUs. Sending multiple images allows to provide more data via the display, which may be required e.g. in case of the displays not being large enough to show a full optical code to be scanned. Preferably, the optical code comprising a set of at least 2 images is used in embodiments wherein the conference system comprises an conference application service product configured to be installed on a personal communication device. As such, the conference application service can be configured to scan the images sequentially or in a pre-defined order or set-up.

### Conference systems:

In the following an exemplary prior art conference system is discussed. The present invention is particularly advantageous to be applied to this prior art conference system, but may also be applied to other setups for the conference system.

A conference system includes a central unit in connection with several delegate units for the participating delegates. The central unit serves to combine audio channels from various delegate units and to distribute the received audio and data channel and combinations of these channels. A delegate unit may contain hardware buttons to participate in a conference (e.g. voting, microphone activation, volume control, ...). The delegate unit may further be provided with web-based graphical interface.

Audio processing and transport may be completely separated from the video processing and transport. Audio and video streams may each have their own network and control.

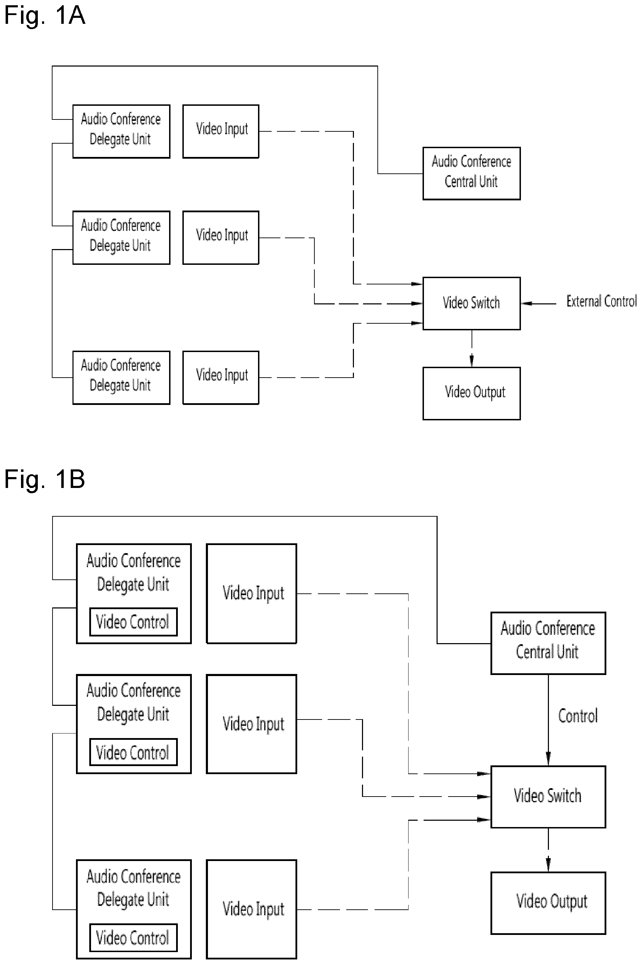

A prior art set-up is shown in Fig.1A. A number of delegate units are shown connected to a central unit. Over the conference network microphone signals are transported between delegate units and central unit. Also shown is a video input block for each delegate unit. Video sharing by the delegates is enabled by a video switch that is managed by external control means. Either an operator has to operate the switch, or, in more advanced configurations, delegates can manipulate the switch themselves, but in the shown example, there is no link between the video installation and the audio conference system. The video part has its own control arrangement. This video switch then generates the video output in accordance with the received control signals.

In the configuration shown in Fig. 1B another type of prior art conference system is illustrated. The conventional microphone and microphone controller that controls the microphone signal transport over the conference system network are not shown in the delegate units depicted in the figure. The various delegate units are provided with what is indicated in the figure as a 'video control', i.e. a video control means that allows transmitting a control signal (a video request) to the audio conference central unit. As opposed to the set-up of Fig.1A, it is now the conference central unit that performs control over the external video switch.

Similar to a classic 'word request' launched by a delegate who wishes to be given the floor in an audio conference system, a delegate can now issue a video request, which is transferred over the conference network to the conference central unit. Before steering the video switch, the conference central unit processes the video requests according to some given protocol, e.g. one already commonly used in the routing of the microphone signals. Some examples of such protocols are :
- Direct Access: a delegate requesting a video stream transfer is immediately granted access to the main screen, only if there is a unassigned sub-screen left. Otherwise the request is denied.
- FIFO: if all sub-screens are occupied, the video of the first delegate that was assigned access to the main screen, is removed, thus making room for the last delegate that requested a video stream.
- Microphone coupled: when the delegate is granted access to the audio floor channel, he is automatically assigned a sub-screen.
- Granted by chairman: the chairman can manually assign sub-screens to delegates.
- Based on agenda: in a meeting with an agenda where the speakers and their order for intervening in the discussion on the different items are known in advance, their video stream (and their microphone) can be opened automatically if the meeting has reached the relevant agenda item.

Note that in the embodiment of Fig. 1B the video control means is integrated in the delegate unit. In other embodiments this may not be the case. The video control means then may form a separate device.

In Fig. 1B each conference delegate system is provided with a separate video unit to which the external video signal is input. In an alternative embodiment this video unit can be integrated in the delegate unit.

An important characteristic feature of the embodiment in Fig. 1B is that the video signal is still transmitted from the video input block to a central video switch, as indicated by the dashed arrows.

### Further exemplary embodiments of the present invention:

In an embodiment, the conference system may comprise:
- One or more delegate units (for participant, interpreter or chairman). The delegate unit has a microphone, a loudspeaker, a small screen (optionally with touch) and some buttons, but may for instance lack a full keyboard.
- The central unit (central equipment which controls all audio, video and other flows in the conference system). This central unit is connected to:
   ∘ all delegate units in the room, preferably via a private IP or proprietary network, and
   ∘ via a gateway to the internet and/or to the conference server via an IP link.
- The conference server, which may be a cloud server, which is publicly reachable.
- A third party Identity & Authorization server, such as:
   ∘ Itsme
   ∘ Google
   ∘ Microsoft Active Directory / Microsoft Authentication
- A Mobile device (e.g. a smart phone) from the delegate

### Exemplary workflow:

The Central Unit or conference server generates for each conference / delegate unit a unique, time-limited web link. The conference server also preferably keeps a register of the list of valid web links, combined with the ID of the applicable delegate unit. The web links are presented on the delegate units as a unique, time-limited optical code.

This QR code can contain a weblink in the form of <server-address>/<unique-path-per-unit>, or using parameters <server-address>/login?key=<unique-key-per-unit>. Of course other forms are also possible. The general idea may be that the key or unique path has a large number of characters such that brute force guessing is made practically impossible. This key or unique path may preferably be a one-time token.

The delegate scans the QR code with a personal communication device (e.g. smartphone), with a standard QR code scanning app (for example Google Lens) which comes preinstalled on almost each Android smartphone and then enters the web page (presented by the conference server). As the QR code is unique, the server knows from which delegate unit the requests originates. Once the page with this unique code is accessed, the QR code may optionally be burned, i.e. be flagged as being used and/or be rendered invalid.

The conference server presents a page to the participant which may display or list (a number of) (an) external identification / authentication / authorization service(s) (such as itsme in Belgium/the Netherlands or Franceconnect in France), or a dedicated login page maintained by the customer. Google, Microsoft Active Directory or Microsoft Authentication are also a possibility.

At the end of the identification / authentication / authorization process, the Authorization server may return to the conference server the identity (and if required additional info) from the delegate. The Central Unit determines if the identity (for example First name + Name) is in the list of allowed identities for this particular delegate unit. (The allowed list of a chairman delegate unit may typically be only one person, in many cases; the allowed list of a participant delegate unit may be very long, except if e.g. fixed seating is applicable). If the user is in this list, then this user (delegate) is authorized to use this particular delegate unit, or in other words, this delegate unit is authorized to be used in this meeting and is associated with this delegate. The same can apply to interpreter units / desks. Also the ID of the delegate is preferably linked to this particular delegate unit for the duration of the meeting (or until log off of the delegate unit).

Access to a chairman unit may preferably only be allowed to a delegate with the role of chairman (for example), or people of the same (political) fraction have to sit together (kind of semi-fixed seating). Hence in an embodiment, the set of delegate units comprise 1, 2, 3, 4, 5, 6, 7, 8, 9, 10 or more delegate units, said delegate units being any combination of the following DU types:
- a standard delegate unit, which typically comprises hardware and software allowing standard functionalities, such as speaking, listening, voting
- a chairman unit, which typically comprises hardware and software allowing moderator functionalities on top of the standard functionalities, such as turning on/off microphones of other DUs, and/or
- an interpreter unit, which typically does not have hardware and/or software for voting, but may have a set of buttons allowing to choose a source language and a target language.

## Claims

1. A conference system comprising a central unit and a set of one or more delegate units whereby each of the delegate units is in a predefined connection arrangement with the central unit, whereby each of the delegate units comprises a display for showing an optical code,
the conference system further comprising a conference server comprising a web interface, whereby the conference server and the central unit are configured to communicate with each other,
whereby the central unit is configured to send data representing an optical code to each of the delegate units, said optical code comprising unique delegate unit identification information,
whereby the conference server is configured to allow a web-based connection with a personal communication device and to receive the unique delegate unit identification information from said personal communication device,
whereby the conference server and the central unit are configured to establish a logical link between the personal communication device and the delegate unit on the basis of the unique delegate unit identification information.

2. A conference system according to claim 1, whereby the optical code comprises web-based connection information for allowing a personal communication device to connect via a browser application to the web interface of the conference server and to pass the unique delegate unit identification information to the conference server.

3. A conference system according to claim 1, comprising an conference application service product configured to be installed on a personal communication device, said conference application service product comprising instructions for a conference application service which is configured for:
∘ scanning the optical code comprising the unique delegate unit identification information;
∘ connecting to the conference server with a web-based connection and passing the unique delegate unit identification information to the conference server.

4. A conference system according to any of the previous claims, whereby the optical code is a quick response (QR) code.

5. A conference system according to any of the previous claims, whereby the conference system comprises a set of one or more personal communication devices, each personal communication device comprising an optical scanner for scanning the optical code.

6. A conference system according to any of the previous claims, whereby the conference server is configured to, upon connection of a personal communication device with the server, authenticate, authorize and/or identify a user of the personal mobile device, preferably prior to establishing the logical link and/or preferably via a third party identity server.

7. A conference system according to any of the previous claims, whereby the optical code comprises a set of at least 2 images, preferably whereby the images are sent sequentially to the delegate units and/or are shown sequentially on the display of the delegate units.

8. A conference system according to any of the previous claims, whereby the conference server is configured to differentiate the functionalities and/or data which are offered to the personal communication device on the basis of the unique delegate unit identification information.

9. A conference system according to any of the previous claims, whereby the delegate unit comprises a microphone, a loudspeaker, and/or a small touch screen.

10. A conference system according to any of the previous claims, whereby the central unit is connected to each delegate unit via a private IP or proprietary network.

11. A conference system according to any of the previous claims, whereby the central unit is connected to the internet via a gateway and/or to the conference server, preferably via an IP link.

12. A conference system according to any of the previous claims, whereby the set of delegate units comprise at least two delegate units.

13. A conference system according to any of the previous claims, whereby the central unit is configured to send data representing an optical code to each of the delegate units upon request from the conference server.

14. A conferencing method comprising the steps of:
- providing a conference system according to any of the previous claims;
- providing a set of one or more personal communication devices, each personal communication device comprising an optical scanner for scanning an optical code;
- for each of the delegate units of the conference system:
• generating an optical code for the delegate unit, said optical code comprising unique delegate unit identification information and optionally web-based connection information for allowing a personal communication device to connect via a browser application to the web interface of the conference server and to pass the unique delegate unit identification information to the conference server and
• sending the optical code to the delegate unit;
• showing the optical code on the display of the delegate unit
- scanning an optical code shown on the display of a delegate unit by the personal communication device;
- connecting the personal communication device via a browser application to the web interface of the conference server and passing the unique delegate unit identification information of the optical code from the personal communication device to the conference server;
- establishing a logical link between the personal communication device and the delegate unit on the basis of the unique delegate unit identification information.

15. A conference system comprising a central unit and a set of one or more delegate units whereby each of the delegate units is in a predefined connection arrangement with the central unit, whereby each of the delegate units comprises a display for showing an optical code,
the conference system further comprising a conference server comprising a web interface, whereby the conference server and the central unit are configured to communicate with each other,
whereby the central unit is configured to send data representing an optical code to each of the delegate units, said optical code comprising unique delegate unit identification information,
whereby the conference server is configured to allow a web-based connection with a personal communication device and to receive the unique delegate unit identification information from said personal communication device,
whereby the conference server is configured to, upon connection of a personal communication device with the server, authenticate, authorize and/or identify a user of the personal mobile device, preferably via a third party identity server, and preferably prior to establishing a logical link,
optionally whereby the conference server and the central unit are configured to establish a logical link between the personal communication device and the delegate unit on the basis of the unique delegate unit identification information.
